Europäisches Patentamt

European Patent Office

Office européen des brevets

(11) Veröffentlichungsnummer: **0 304 639**
**A2**

## (12) EUROPÄISCHE PATENTANMELDUNG

(21) Anmeldenummer: 88111917.6

(22) Anmeldetag: 23.07.88

(51) Int. Cl.4: **H01R 19/00 , H01R 13/66 , G02B 6/38**

(30) Priorität: 24.08.87 CH 3235/87

(43) Veröffentlichungstag der Anmeldung:
01.03.89 Patentblatt 89/09

(84) Benannte Vertragsstaaten:
**AT BE CH DE ES FR GB IT LI NL SE**

(71) Anmelder: **FELLER AG.**
**Bergstrasse**
**CH-8810 Horgen(CH)**

(72) Erfinder: **Rütimann, Peter**
**Schwertstrasse 10**
**CH-6300 Zug(CH)**

(74) Vertreter: **Scheidegger, Zwicky, Werner & Co.**
**Stampfenbachstrasse 48 Postfach**
**CH-8023 Zürich(CH)**

(54) Steckvorrichtung für die Übertragung von elektrischer Energie und von optischen Signalen.

(57) Die Steckvorrichtung, sei dies nun ein Stecker (1) und/oder eine Steckdose (7), weist mehrere Kontaktstifte (2-4) oder Steckkontakthülsen (8-10) auf, welche der Uebertragung elektrischer Energie dienen, und in diese Kontaktelemente integriert, Lichtwellenleiter (5,6 bzw. 11,12) zur Uebertragung optischer Informationssignale über ein und dieselbe Steckvorrichtung.

# Fig.1

EP 0 304 639 A2

## Steckvorrichtung für die Uebertragung von elektrischer Energie und von optischen Signalen

Die vorliegende Erfindung betrifft eine Steckvorrichtung für die Uebertragung von elektrischer Energie einerseits und von optischen Informationssignalen andererseits auf ein Gegenstück der Steckvorrichtung, bei welcher zur Energieübertragung ein Stecker mit mehreren Kontaktstiften und/oder eine Steckdose mit mehreren Steckkontakthülsen zur Aufnahme von Kontaktstiften eines Steckers und für die Uebertragung von Informationssignalen mindestens ein Lichtwellenleiter vorgesehen sind.

In der heute üblichen Installationstechnik, insbesondere im Bereich Haushalt und Büro, wird in der Regel in jedem Raum elektrischer Strom über Steckdosen nach Norm des jeweiligen Landes zur Verfügung gestellt. Neben dieser Feinverteilung von elektrischer Energie wird mehr und mehr auch Information verteilt, dies über Telephonanschlüsse, Local Area Networks oder andere Informationskanäle, u.a. auch über Lichtwellenleiter. Die beiden Kanäle müssen separat geführt werden. Trotzdem beeinflussen sie sich oft, da auch der Informationskanal meist über metallische Leiter geführt, von der elektrischen Energie-Leitung störend beeinflusst werden kann.

Noch hat sich bezüglich dieser anderen Informations-Uebertragungskanäle kein allgemein üblicher Standard durchgesetzt, vielmehr beherrscht eine Vielfalt von Systemen das Feld, so dass die Anschaltung an einen Informationskanal wesentlich mehr Mühe macht als der Bezug von elektrischer Energie.

Typisch und für den Anwender nachteilig und unangenehm ist der Umstand, dass bei modernen Geräten der Bürotechnik und der neueren Heimelektronik die meisten Einheiten sowohl über den Netzstecker wie auch über eine Datensteckverbindung mit der hausseitigen Installationstechnik verbunden werden müssen. Eine Kompatibilität (innerhalb der jeweiligen Landesgrenzen) ist einzig bei der Stromversorgung gegeben, bei welcher jeder geräteseitige Stecker in praktisch jede gebäudeseitige Steckdose passt und damit alle geforderten Spezifikationen (Spannung, Frequenz, maximaler Leistungsbedarf) erfüllt.

Aufgabe der Erfindung ist, eine Steckverbindung zu schaffen, welche sowohl die Uebergabe von elektrischer Energie wie auch die Uebergabe und Entgegennahme von optischen Informationssignalen auf einfache Weise ermöglicht.

Diese Aufgabe wird bei einer Steckvorrichtung der eingangs erwähnten Art erfindungsgemäss dadurch gelöst, dass jeder Lichtwellenleiter zur Uebertragung von optischen Informationssignalen ebenfalls im Stecker angeordnet ist und durch jeweils einen Kontaktstift bis zum vorderen Ende des letzteren führt.

Im Falle der Steckdose ist jeder Lichtwellenleiter entsprechend ebenfalls in der Steckdose angeordnet und dabei zum Grund einer zugeordneten Steckkontakthülse geführt.

Beim Stecker ist jeder Lichtwellenleiter vorzugsweise koaxial durch den zugehörigen Kontaktstift geführt.

Als Lichtwellenleiter eignen sich solche aus Kunststoff oder Glasfaser.

Bei jedem Stecker oder jeder Steckdose kann jeweils ein Lichtwellenleiter für den Hinweg und ein weiterer Lichtwellenleiter für den Rückweg der Informationssignalübertragung vorgesehen sein. Gegebenenfalls kann auch ein einziger Lichtwellenleiter für die Informationssignalübertragung in der einen oder anderen Richtung dienen.

Jede dieser Steckvorrichtungen ist natürlich für sich allein sinnvoll (zur Bildung der Grundausrüstung), ein technischer Einsatz lässt sich jedoch erst realisieren, wenn die jeweilige Steckvorrichtung und ihr Gegenstück erfindungsgemäss ausgestaltet sind.

Für diesen praktischen Einsatz sind vorzugsweise Mittel vorgesehen, um die Kontaktflächen der Lichtwellenleiter des einen Vorrichtungsteils an die Kontaktflächen der Lichtwellenleiter des Gegenstückes selbstzentrierend anzulegen.

Ebenfalls vorteilhaft ist es, wenn Mittel zur selbsttätigen Längspositionierung der Steckerstifte vorgesehen sind, um eine möglichst präzise Kopplung von sich in den beiden Vorrichtungsteilen gegenüberliegenden Lichtwellenleitern zu gewährleisten.

Eine Optimierung kann dann erreicht werden, wenn zwischen den Kontaktflächen von jeweils zwei sich gegenüberliegenden Lichtwellenleitern ein Kopplungshilfsmittel aus flexiblem Material mit niedriger Lichtdämpfung vorgesehen ist.

Die Erfindung wird nachstehend anhand von in der Zeichnung dargestellten Ausführungsbeispielen noch etwas näher erläutert. Es zeigt:

Fig. 1 rein schematisch einen Stecker und eine Steckdose, beide erfindungsgemäss ausgerüstet, und

Fig. 2 ebenfalls schematisch, einen Kontaktstift und eine Steckkontakthülse von erfindungsgemäss ausgerüsteten Steckvorrichtungen.

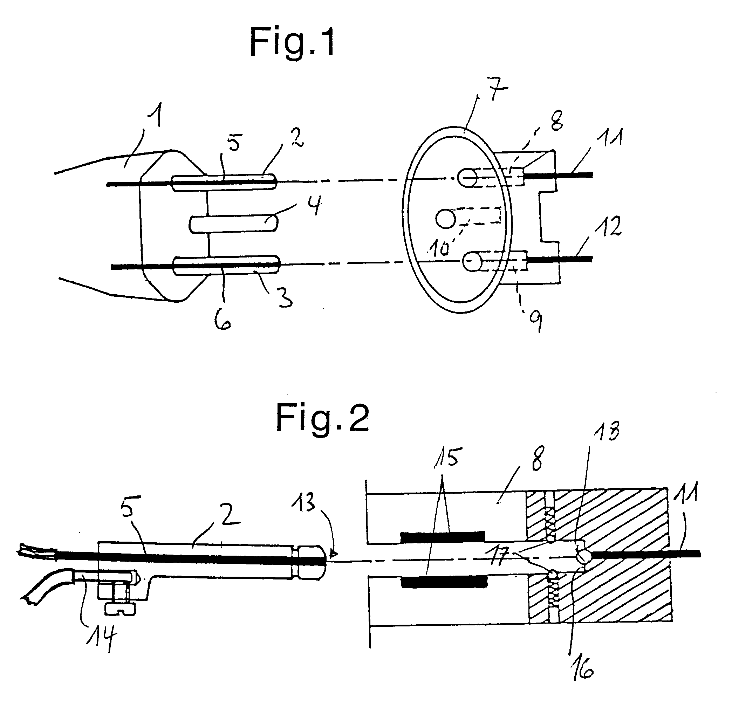

Der in Fig. 1 schematisch dargestellte Stecker 1 ist mit drei Kontaktstiften 2,3 und 4 ausgerüstet und bildet damit an sich einen normalen Netzstecker, welcher über die elektrisch leitenden Kontaktstifte 2,3 und 4 der Uebertragung von elektrischer Energie (beispielsweise aus einer Steckdose) dient.

Abweichend von normalen Steckern sind nun aber in den Kontaktstiften 2 und 3 Lichtwellenleiter 5 bzw. 6 aus Kunststoff oder Glasfaser, d.h. aus elektrisch isolierendem Material eingebettet. Diese Lichtwellenleiter 5,6 führen aus einem entsprechenden Kabel von hinten in die hohl, d.h. mit einer axialen Ausnehmung ausgebildeten Kontaktstifte 2,3 und durch diese bis zu deren vorderen Enden, wo sie freie und vorzugsweise polierte Kontaktflächen für eine gegebenenfalls gegenüberliegende Kontaktfläche eines anderen Lichtwellenleiters bilden.

Entsprechend ist die in Fig. 1 gezeigte Steckdose 7 ausgebildet: Diese weist drei elektrisch leitende Steckkontakthülsen 8,9 bzw. 10 auf, in welchen die elektrisch leitenden Kontaktstifte eines Gegensteckers in an sich bekannter Weise aufgenommen werden können.

Bei zwei der Steckkontakthülsen 8 bzw. 9 führen vom Hülsengrund aus ebenfalls jeweils Lichtwellenleiter 11,12 durch den Steckdosenkörper und können in Form eines Kabels weitergeführt werden. Auch hier bleiben die Enden der Lichtwellenleiter am Hülsengrund freie, vorzugsweise polierte Kontaktflächen für entsprechende Gegenleiter. Die Steckkontakthülsen 7-9 sind in üblicher Weise an die Netzleitung anschliessbar.

Fig. 2 der Zeichnung zeigt einige Details von Steckvorrichtungen nach Fig. 1. Auf der linken Seite ist ein in Längsrichtung durchgehend hohler Kontaktstift 2 gezeigt, durch welchen koaxial ein Lichtwellenleiter 5 aus Kunststoff oder Glasfaser geführt ist, wobei am vorderen Ende eine vorzugsweise polierte Kontaktfläche 13 des Lichtwellenleiters 5 vorliegt. Die eigentliche Verbindung zur Uebertragung von elektrischer Energie wird über den Draht 14 weggeführt.

Auf der rechten Seite von Fig. 2 ist eine Steckkontakthülse 8 dargestellt, welche z.B. mit Kontaktfedern 15 für die Uebertragung elektrischer Energie ausgerüstet ist (führt zum Netzleiter). Am Grund 16 der Hülse 8 endet ein Lichtwellenleiter 11 mit vorzugsweise polierter Kontaktfläche.

Dank dem mit Kontaktfedern 15 ausgerüsteten vorderen Teil der Hülse 8 ist eine Selbstzentrierung eines eingeführten Kontaktstiftes 2 im hinteren Hülsenteil möglich. Wichtig ist nämlich, dass zwei miteinander zu kuppelnde Lichtleiter möglichst nahe und zentriert aufeinander angelegt werden. Aus diesem Grund können zur sicheren Längspositionierung eines Kontaktstiftes Hilfsmittel vorgesehen sein (z.B. federbelastete Arretierkugeln 17, welche den Stift gegen den Hülsengrund pressen oder diesen wenigstens in der Endposition arretieren).

Falls zur Optimierung erforderlich, d.h. um eventuelle Licht-Kopplungsverluste minimal zu halten, könnte zwischen die optischen Kontaktflächen von zwei aneinanderstossenden Lichtleitern ein Kopplungshilfsmittel 18 aus flexiblem Material mit niedriger Lichtdämpfung eingeschaltet werden.

Mit der erfindungsgemässen Konstruktion ist es gelungen, ohne Beeinträchtigung der elektrischen Energieübertragung in ein und derselben Steckvorrichtung auch Lichtwellenleiter zur Uebertragung optischer Signale zu integrieren.

Da die Uebertragungsmedien grundverschieden sind (für die elektrische Energieübertragung ein Leiter, für die optische Uebertragung ein Isolator) hat es sich gezeigt, dass keine gegenseitige Beeinflussung bzw. Störung erfolgt.

Für den Anwender von grossem Nutzen ist der Umstand, dass insbesondere Geräte der Informationsverarbeitung nunmehr mittels einer einzigen Steckvorrichtung in allen ihren Funktionen mit der hausseitigen Installation verbunden werden können. Bei ausgebauter Installation sind damit wesentliche Vereinfachungen zu erzielen.

**Ansprüche**

1. Steckvorrichtung für die Uebertragung von elektrischer Energie und von optischen Informationssignalen auf ein Gegenstück der Steckvorrichtung, bei welcher zur Energieübertragung ein Stecker mit mehreren Kontaktstiften und für die Uebertragung von optischen Informationssignalen mindestens ein Lichtwellenleiter vorgesehen ist, dadurch gekennzeichnet, dass jeder Lichtwellenleiter ebenfalls im Stecker angeordnet ist und durch jeweils einen Kontaktstift bis zum vorderen Ende des letzteren führt.

2. Steckvorrichtung nach Anspruch 1, dadurch gekennzeichnet, dass jeder Lichtwellenleiter koaxial durch den zugehörigen Kontaktstift geführt ist.

3. Steckvorrichtung nach Anspruch 1 oder 2, dadurch gekennzeichnet, dass der Lichtwellenleiter aus Kunststoff oder Glasfaser gebildet ist.

4. Steckvorrichtung nach einem der Ansprüche 1-3, dadurch gekennzeichnet, dass in einem der Kontaktstifte ein Lichtwellenleiter für den Hinweg und in einem anderen Kontaktstift ein Lichtwellenleiter für den Rückweg der Informationsübertragungsstrecke angeordnet ist.

5. Steckvorrichtung nach einem der Ansprüche 1-3, dadurch gekennzeichnet, dass nur in einem der Kontaktstifte ein Lichtwellenleiter angeordnet ist, welcher der Informationssignalübertragung in der einen und/oder anderen Richtung dient.

6. Steckvorrichtung für die Uebertragung von elektrischer Energie und von optischen Informationssignalen auf ein Gegenstück der Steckvorrichtung, bei welcher zur Energieübertragung eine Steckdose oder ein weiblicher Steckerteil mit mehreren Steckkontakthülsen zur Aufnahme von Kontaktstiften eines Steckers und für die Uebertragung von optischen Informationssignalen mindestens ein Lichtwellenleiter vorgesehen ist, dadurch gekennzeichnet, dass jeder Lichtwellenleiter ebenfalls in der Steckdose angeordnet ist und zum Grund einer zugeordneten Steckkontakthülse führt.

7. Steckvorrichtung nach Anspruch 6, dadurch 9ekennzeichnet, dass der Lichtwellenleiter aus Kunststoff oder Glasfaser gebildet ist.

8. Steckvorrichtung nach einem der Ansprüche 6 oder 7, dadurch gekennzeichnet, dass für den Hinweg und für den Rückweg der Informationsübertragungsstrecke jeweils ein Lichtwellenleiter zum Grund einer ersten bzw. einer zweiten Steckkontakthülse führt.

9. Steckvorrichtung nach einem der Ansprüche 1-5 und/oder 6-8, dadurch gekennzeichnet, dass Mittel vorgesehen sind, um die Kontaktflächen der Lichtwellenleiter des einen Vorrichtungsteils an die Kontaktflächen der Lichtwellenleiter des Gegenstückes selbstzentrierend anzulegen.

10. Steckvorrichtung nach einem der Ansprüche 1-5 und/oder 6-9, dadurch gekennzeichnet, dass Mittel zur selbsttätigen Längspositionierung der Steckerstifte vorgesehen sind, um eine möglichst präzise Kopplung von sich in den beiden Vorrichtungsteilen gegenüberliegenden Lichtwellenleitern zu gewährleisten.

11. Steckvorrichtung nach einem der Ansprüche 1-10, dadurch gekennzeichnet, dass zwischen den Kontaktflächen von jeweils zwei sich gegenüberliegenden Lichtwellenleitern ein Kopplungshilfsmittel aus flexiblem Material mit niedriger Lichtdämpfung vorgesehen ist.

# Fig.1

# Fig.2